# EUROPEAN PATENT SPECIFICATION

(11) **EP 2 375 812 B1**
(45) Date of publication and mention of the grant of the patent: **07.05.2014**
(21) Application number: 11003071.5
(22) Date of filing: 12.04.2011
(51) Int. Cl.: H04W 36/00, H04W 76/02, H04W 4/16

(54) **Method of handling call transferring and related communication device**
Verfahren zur Handhabung von Rufweiterleitung und dazugehörige Kommunikationsvorrichtung
Procédé de gestion de transfert d'appel et appareil de communication associé

(30) Priority: 12.04.2010 US 322916 P; 15.04.2010 US 324309 P; 11.04.2011 US 83619
(43) Date of publication of application: 12.10.2011
(73) Proprietor: HTC Corporation, Taoyuan City Taoyuan County (TW)
(72) Inventor: Wu, Chih-Hsiang, Taoyuan City, Taoyuan County 330, (TW)
(74) Representative: Carstens, Dirk Wilhelm

(56) References cited:
- ERICSSON ET AL: "MSC Server assisted mid-call feature - PS to CS and SRVCC updates - Atl1", 3GPP DRAFT; C1-094304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20091012, 12 October 2009 (2009-10-12), XP050383128, [retrieved on 2009-10-05]
- ERICSSON ET AL: "MSC Server assisted mid-call feature - single held session", 3GPP DRAFT; C1-100173, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. San-Francisco; 20100120, 4 February 2010 (2010-02-04), XP050408296, [retrieved on 2010-02-04]
- ZTE: "Support for held session in Dual-Radio", 3GPP DRAFT; S2-101496_S2-101109_WASS2-100585_DRVCC_HEL D_23237_REL9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 24 February 2010 (2010-02-24), XP050434010, [retrieved on 2010-02-24]
- SAMSUNG: "Support for mid-call services", 3GPP DRAFT; S2-090173_SUPPORT FOR MID-CALL SERVICES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Phoenix; 20090107, 7 January 2009 (2009-01-07), XP050332756, [retrieved on 2009-01-07]
- SAMSUNG: "Alternative to support for mid-call services for SRVCC", 3GPP DRAFT; S2-091119_SUPPORT FOR MID-CALL SERVICES-SAMSUNG_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest; 20090210, 10 February 2009 (2009-02-10), XP050333526, [retrieved on 2009-02-10]

## Description

### Background of the Invention

### 1. Field of the Invention

The application relates to a method used in a wireless communication system, and more particularly, to a method for handling call transferring in a wireless communication system.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as to user equipments (UEs).

A Single Radio Voice Call Continuity (SRVCC) provides the ability to transmit a voice call from the VoIP/IMS (IP Multimedia Subsystem) packet domain to the legacy circuit domain. Variations of SRVCC are being standardized to support both GSM/UMTS and CDMA 1x circuit domains. For an operator with a legacy cellular network who wishes to deploy IMS/VoIP-based voice services in conjunction with the rollout of an LTE network, SRVCC provides their VoIP subscribers with coverage over a much larger area than would typically be available during the rollout of a new network.

SRVCC functions as follows. An SRVCC-capable UE engaged in a voice call transmits measurement reports including measurement results to the LTE network (e.g. E-UTRAN). The LTE network determines that the voice call needs to be moved to the legacy Circuit-Switched (CS) domain based on the measurement results. It notifies a mobile switching center (MSC) server of the need to switch the voice call from the Packet-Switched (PS) to the CS domain and initiates a handover of the LTE voice bearer to the circuit network (e.g. UTRAN, GERAN or CDMA2000). The MSC server establishes a bearer path for the mobile station in the legacy network and notifies the IMS core that the UE's call leg is moving from the PS to the CS domain. The call leg represents a logical connection between the router and either a telephony endpoint over a bearer channel, or another endpoint. The circuit-packet function in the IMS core then performs the necessary inter-working functions. When the UE arrives on-channel in the legacy network, it switches its internal voice processing from VoIP to legacy-circuit voice, and the call continues.

A UE has one or more IMS calls with a network. Only one IMS call can be active one time. The other IMS calls are inactive (e.g. held). The network sends the UE a SRVCC handover command (e.g. HANDOVER TO UTRAN COMMAND, RADIO BEARER SETUP, or HANDOVER COMMAND). In prior art, it is only specified that when the UE has one CS call established to the network (i.e. single call case only described in the prior art), the UE and the network set a transaction identifier (TI) value to 000 for the CS call corresponding to an IMS call. If the UE has multiple IMS calls established (e.g. one is an active call and the others are inactive calls) which IMS call should be selected for switching is not clarified. If only one IMS call is switched to the CS call, it is not clear how to deal with the other IMS calls. If multiple IMS calls are switched to the CS calls, it is not specified how to switch at least two IMS calls to CS calls in the prior art. For example, it is not clear how to determine CS TI value for each of the CS calls. Without consistently determining the IMS call identity (ID) value in the UE and the network, the held calls cannot be retrieved correctly after the SRVCC handover in the network.

ERICCSON ET AL: "MSC Server assisted mi-call feature - PS to CS and SRVCC updates - Atl1", 3GPP DRAFT; C1-094304, 3RD GENERATION PARTNERSHIP PROJECT (3GPP), MOBILE COMPETENCE CENTRE, 650, ROUTE DES LUCIOLES, F-06921 SOPHIA-ANTIPOLIS CEDEX, FRANCE, Phoenix, USA, 12 October 2009, XP050383128, was used as a basis for the preamble of claim 1 and discloses that after successful SRVCC procedures, if the SC UE is not using ICS capabilities, the SC UE supports the MSC Server assisted mid-call feature; and there is at least one active PS audio session and the Contact header field received by the SC UE at the establishment of the active PS audio session, which has been most recently made active, includes the media feature-tag g.3gpp.mid-call, then if two or more active PS audio sessions exist, the SC UE shall replace the PS audio components of the two most recently active PS audio sessions with the newly established active CS voice call with transaction identifier 0 and held CS voice calls with transaction identifier 1.

Attention is also drawn to ERICCSON ET AL: "MSC Server assisted mi-call feature - single held session", 3GPP DRAFT; C1-100173, 3RD GENERATION PARTNERSHIP PROJECT (3GPP), MOBILE COMPETENCE CENTRE, 650, ROUTE DES LUCIOLES, F-06921 SOPHIA-ANTIPOLIS CEDEX, FRANCE, CT-WG1, San Francisco, USA, 4 February 2010, XP050408296.

### Summary of the Invention

According to the present invention, a method of handling call transferring for a communication device during a Single Radio Voice Call Continuity (SRVCC) handover procedure in a wireless communication system is provided as set forth in claim 1. Preferred embodiments of the present invention may be gathered from the dependent claims.

Also, a method of handling call transferring for a communication device during a SRVCC handover procedure is disclosed. The method comprise switching a plurality of IP Multimedia System (IMS) calls to a plurality of corresponding circuit-switched (CS) calls according to reception of a handover command when a mobile device has the plurality of IMS calls; and setting a plurality of transaction identifier (TI) values for each of the plurality of corresponding CS calls according to the plurality of IMS calls.

Also, a method of handling call transferring for a communication device during a SRVCC handover procedure is disclosed. The method comprises switching a plurality of IMS calls to a plurality of CS calls according to reception of a handover command when a mobile device has the plurality of IMS calls; and setting a plurality of TI values of the plurality of CS calls according to the first command or a second command.

Also, a method of handling call transferring for a communication device during a SRVCC handover procedure is disclosed. The method comprises switching a first IMS call to a CS calls according to reception of a handover command when a mobile device has the first IMS call and a second IMS call; the first IMS call is active and the second IMS call is inactive.

Also, a method of handling call transferring for a network during a SRVCC handover procedure is disclosed. The method comprises not initiating the SRVCC handover procedure when a mobile device has a plurality of IMS calls.

Also, a communication device for handling call transferring during a SRVCC handover procedure is disclosed. The communication device comprises means for switching a plurality of IMS calls to a plurality of CS calls according to reception of a handover command when a mobile device has the plurality of IMS calls; and means for setting a plurality of TI values for each of the plurality of corresponding CS calls according to the plurality of IMS calls.

Also, a communication device of handling call transferring during a Single Radio Voice Call Continuity (SRVCC) handover procedure is disclosed. The communication device comprises means for switching a plurality of IMS calls to a plurality of CS calls according to reception of a handover command when a mobile device has the plurality of IMS calls; and means for setting a plurality of transaction identifier (TI) values of the plurality of CS calls according to the first command or a second command

Also, a communication device for handling call transferring during a SRVCC handover procedure is disclosed. The communication device comprises means for initiating the SRVCC handover procedure; and means for switching a first IMS call to a CS calls according to reception of a handover command when a mobile device has the first IMS call and a second IMS call; the first IMS call is active and the second IMS call is inactive.

Also, a communication device for handling call transferring during a SRVCC handover procedure is disclosed. The communication device comprises means for receiving a command which indicates the SRVCC handover procedure; and means for not initiating the SRVCC handover procedure when a mobile device has a plurality of IMS calls.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of an exemplary wireless communication system.
FIG.2 is a schematic diagram of an exemplary communication device.
Fig.3 illustrates the program code in FIG.2.
FIGs.4-7 is a flow chart of exemplary processes.

### Detailed Description

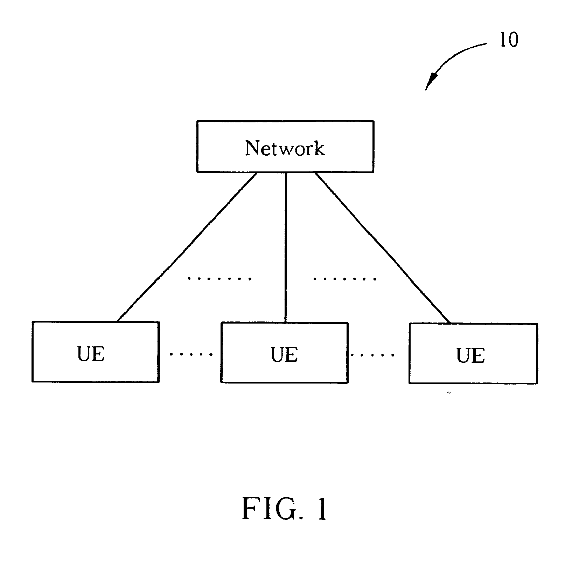

Please refer to FIG.1, which is a schematic diagram of an exemplary wireless communication system 10. The wireless communication system 10, such as a long-term evolution (LTE) system, a HSPA+ (High Speed Packet Access Plus) system) or other mobile communication systems comprises briefly a network and a plurality of user equipments (UEs) wherein the UEs can be mobile devices such as mobile phones, laptops, etc. The network only supports a PS (Packet Switched) service domain, providing IP Multimedia Subsystem (IMS) calls. In the LTE system, the network is referred as an evolved-UTRAN (E-UTRAN) comprising a plurality of eNBs (evolved-Node Bs).Besides, the network and the UE can be seen as a transmitter or receiver according to transmission direction, e.g., for uplink, the UE is the transmitter and the network is the receiver, and for downlink, the network is the transmitter and the UE is the receiver.

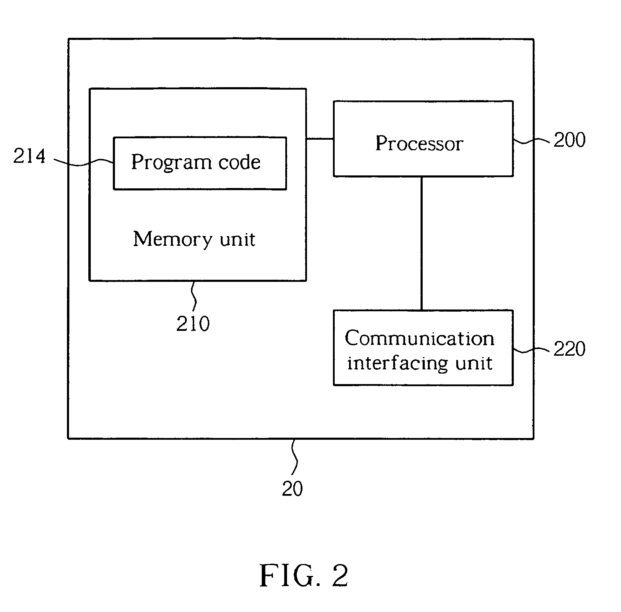

Please refer to FIG.2, which is a schematic diagram of an exemplary communication device 20. The communication device 20 can be the UE or the network shown in FIG. 1 and includes a processor 200, a computer readable recording medium 210 and a communication interfacing unit 220. The computer readable recording medium 210 may be any data storage device that stores storage data 212, including program code 214, thereafter read and processed by the processor 200. Examples of the computer readable recording medium 210 include a subscriber identity module (SIM), read-only memory (ROM), random-access memory (RAM), CD-ROMs, magnetic tapes, hard disks, optical data storage devices, and carrier waves (such as data transmission through the Internet). The communication interfacing unit 220 is preferably a radio transceiver for wirelessly communicating with other communication devices and can transform process results from the processor 200 into radio signals.

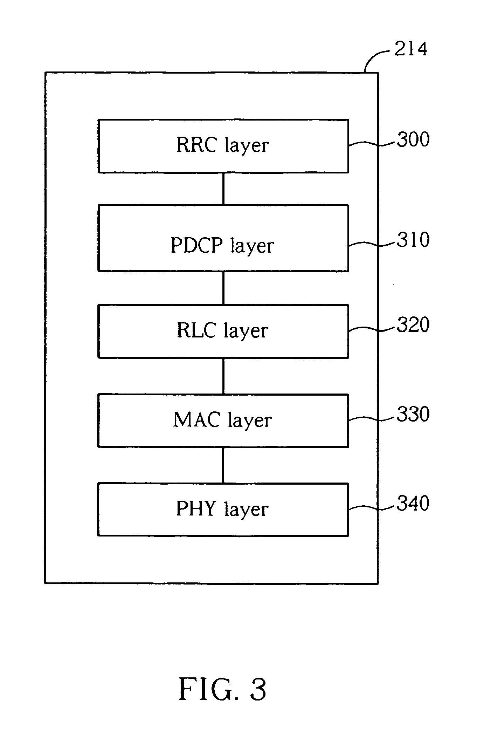

Please refer to Fig. 3, which illustrates the program code 214 in FIG.2. The program code 214 includes program code of multiple communications protocol layers, which from top to bottom are a radio resource control (RRC) layer 300, a packet data convergence protocol (PDCP) layer 310, a radio link control (RLC) layer 320, a medium access control (MAC) layer 330 and a physical (PHY) layer 340.

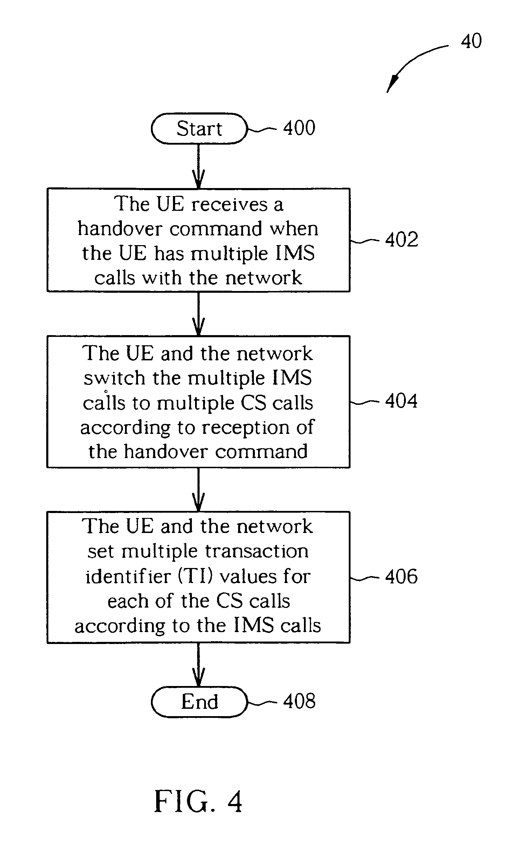

Please refer to FIG.4, which is a flow chart of an exemplary process 40. The process 40 is used for handling call transferring for a UE and a network in a wireless communication system during a SRVCC handover procedure. The wireless communication system could be the wireless communication system 10. The process 40 can be compiled into the program code 214 and include the following steps:

| | |
|---|---|
| Step 400: | Start. |
| Step 402: | The UE receives a handover command when the UE has multiple IMS calls with the network. |
| Step 404: | The UE and the network switch the multiple IMS calls to multiple CS calls according to reception of the handover command. |
| Step 406: | The UE and the network set multiple transaction identifier (TI) values for each of the CS calls according to the IMS calls. |
| Step 408: | End. |

According to the process 40, the UE has multiple IMS calls with the network. The IMS calls may or may not share the same packet switched (PS) configuration (e.g. data radio bearer (DRB) in the LTE system or PS radio access bearer (RAB) in the HSPA system). One of the IMS calls is active and the others are inactive (e.g. held). The active IMS call may be a conference call. The IMS calls can be voice calls, video calls, and etc. If the UE receives a handover command in the mean time, the UE and the network switch the IMS calls to the corresponding CS calls according the reception of the handover command. The handover command preferably is a SRVCC handover command. Then, both of the UE and the network set TI values for each of the corresponding calls according to the IMS calls. In other words, by switching the IMS calls to the corresponding CS calls, the UE and the network can handle call transferring when the UE has at least two IMS calls during the SRVCC procedure. Compared to the prior art, it is clear how the multiple IMS calls should be dealt during the SRVCC handover procedure.

In some examples, the UE and the network may derive the TI values from IMS call identity (ID) values of the IMS calls. For example, one of IMS call has an IMS call identity equal to X. The TI value of its corresponding CS call can be derived as one of X, X-1, X-2, X+1, X+2, and etc. If a certain value has been used as the TI value (e.g. the UE already has been having CS call(s) before the SRVCC handover), the UE and network does not use that value and derive TI value from other possible values. For example, the UE had a CS call whose TI value is equal to X-1, then the UE and network may derived TI values from one of X, X-2, X+1, X+2, and etc.

In some examples, the UE and the network may derive the TI values from an order of the IMS call ID values of the IMS calls. For example, the UE and the network have three IMS calls with IMS call ID values 1, 2 and 3, respectively. The UE and the network set TI values of the CS calls to 0, 1, and 2 according to the increasingly order of the IMS call ID values. If a certain value has been used (e.g. the UE already has been having CS call(s) before the SRVCC handover), the UE and network does not use that value. For example, 0 has been used so it is not available. Therefore, the UE and network set TI value for each of the CS calls from 1, 2, and 3 according to the increasingly order of the IMS call ID values.

In addition, the UE and the network can set multiple call states for each of the corresponding CS calls according to the call states of the IMS calls. In other words, the call state of the CS calls is set to the call state of its corresponding IMS calls identically. The IMS calls determine the call state of the CS calls. For example, the call state of the CS call is set to be active if the call state of its corresponding IMS call is active. The call state of the CS call is set to be held if the call state of its corresponding IMS call is inactive.

The UE may have been having an original CS call which was activated before the SRVCC handover procedure. The UE and the network should set the call states of some CS calls from an active state to a held state if the original CS call is still active. That is, some CS calls may have corresponding IMS calls whose call states were active, but the UE and the network could not set their call states according to the IMS calls while call transferring because the UE may have been having the active CS call. Instead, the UE and the network set those CS calls to be on hold.

For example, the UE has two IMS voice calls (a first IMS call and a second IMS call) in the network. The first IMS call is active. The second IMS call is inactive (e.g. held). The UE receives a HANDOVER TO UTRAN COMMAND message for SRVCC handover. The UE and network switch the first IMS call to a first CS call and, set the TI value of the first CS call to 1 and set the call state of the first CS call to be active. The UE and network switch the second IMS call to a second CS call, set the TI value of the second CS call to 2, and set the call state of the second CS call to be held. Alternatively, the UE and the network may switch the first IMS call to a first CS call, set the TI value of the first CS call to 0, and set the call state of the first CS call to be active. The UE and network switch the second IMS call to a second CS call, set the TI value of the second CS call to 1, and set the call state of the second CS call to be held.

The UE and the network may further set multiple TI flags for each of the corresponding CS call as a mobile terminated call or a mobile originated call. The TI flag may have a length of 1 bit. The bit "0" represents the mobile terminated call and the bit "1" represents the mobile originated call.

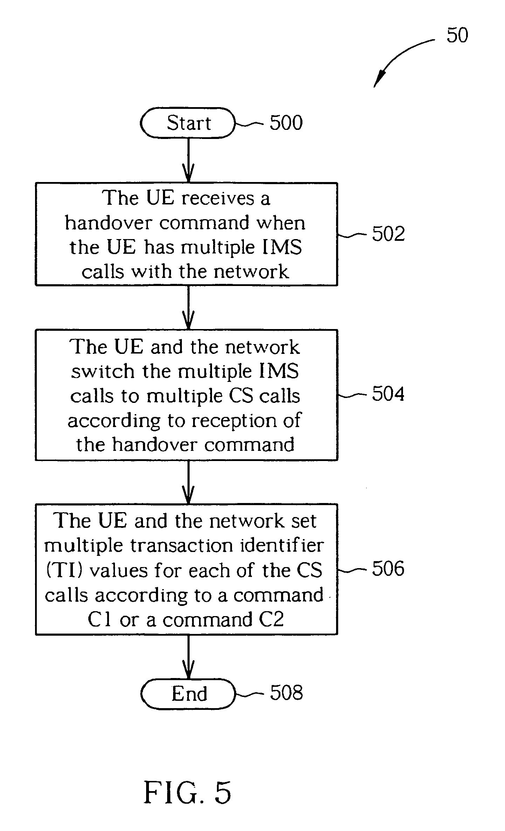

Please refer to FIG.5, which is a flow chart of an exemplary process 50. The process 50 is used for handling call transferring for a UE and a network in a wireless communication system during a SRVCC handover procedure. The wireless communication system could be the wireless communication system 10. The process 50 can be compiled into the program code 214 and include the following steps:

| | |
|---|---|
| Step 500: | Start. |
| Step 502: | The UE receives a handover command when the UE has multiple IMS calls with the network. |
| Step 504: | The UE and the network switch the multiple IMS calls to multiple CS calls according to reception of the handover command. |
| Step 506: | The UE and the network set multiple transaction identifier (TI) values for each of the CS calls according to a command C1 or a command C2. |
| Step 508: | End. |

According to the process 50, the UE has multiple IMS calls with the network. One of the IMS calls is active and the others are inactive (e.g. held). The active call can be a conference call or not. The IMS calls can be voice calls, video calls, and etc. If the UE receives a handover command in the mean time, the UE and the network switch the IMS calls to the corresponding CS calls according the reception of the handover command. The handover command preferably is a SRVCC handover command. Unlike the process 40, the UE and the network set TI values for each of the corresponding calls according to the command C1 or the command C2. In other words, by switching the IMS calls to the corresponding CS calls, the UE and the network can handle call transferring when the UE has at least two IMS calls during the SRVCC procedure.

The command C1 may be referred as to a HANDOVER TO UTRAN COMMAND, which comprises the TI values for each of the CS calls. The command C2 may be referred as to a Radio Resource Control (RRC) message or a Non-Access Stratum (NAS) message, which comprises the TI values for each of the CS calls. The command C2 can be sent alone or included in a container of the command C1.

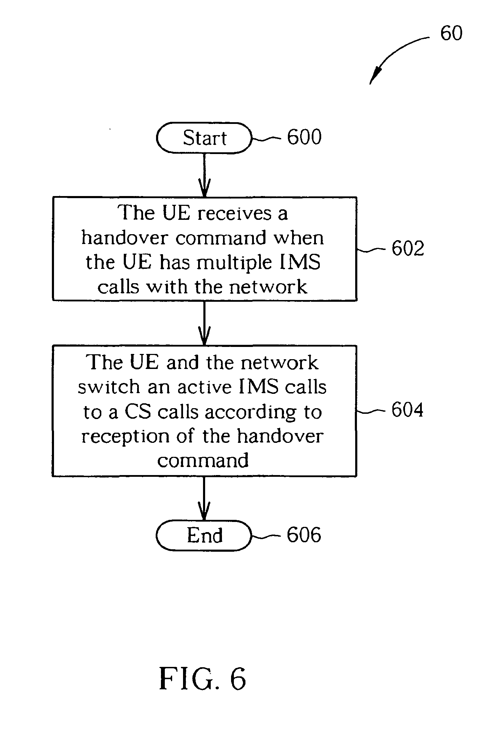

Please refer to FIG.6, which is a flow chart of an exemplary process 60. The process 60 is used for handling call transferring for a UE and a network in a wireless communication system during a SRVCC handover procedure. The wireless communication system could be the wireless communication system 10. The process 60 can be compiled into the program code 214 and include the following steps:

| | |
|---|---|
| Step 600: | Start. |
| Step 602: | The UE receives a handover command when the UE has multiple IMS calls with the network. |
| Step 604: | The UE and the network switch an active IMS call to a CS call according to reception of the handover command. |
| Step 606: | End. |

According to the process 60, the UE has multiple IMS calls with the network. One of the IMS calls is active and the others are inactive (e.g. held). The active call can be a conference call or not. The IMS calls can be voice calls, video calls, and etc. If the UE receives a handover command in the mean time, the UE and the network switch the active IMS call to the corresponding CS call according the reception of the handover command. Namely, the UE and the network preferably select the active IMS call to switch to the CS call. Thus, it is clear that which IMS call should be switched to the CS call without confusion.

In some examples, the UE and the network may release the IMS calls which are on hold. In other examples, the UE and the network may keep the IMS calls which are on hold.

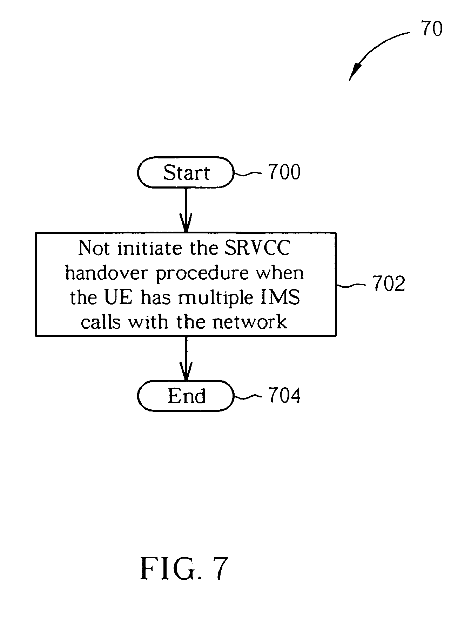

Please refer to FIG.7, which is a flow chart of an exemplary process 70. The process 70 is used for handling call transferring for a network in a wireless communication system during a SRVCC handover procedure. The wireless communication system could be the wireless communication system 10. The process 70 can be compiled into the program code 214 and include the following steps:

| | |
|---|---|
| Step 700: | Start. |
| Step 702: | Not initiate the SRVCC handover procedure when the UE has multiple IMS calls with the network. |
| Step 704: | End. |

According to the process 70, the network does not initiate the SRVCC handover procedure when the UE has multiple IMS voice calls (i.e. more than one IMS voice call). The network may be referred as to a source radio access technology (e.g. E-UTRAN or UTRAN), MME (mobility management entity) or SGSN (Serving GPRS Support Node) which supports the SRVCC handover.

In other words, the source RAN is forbidden to perform the SRVCC handover for the UE with multiple IMS voice calls in LTE or UTRAN network. Alternatively the source MME is forbidden to perform the SRVCC handover for the UE with multiple IMS voice calls in LTE network. Alternatively the source SGSN is forbidden to perform the SRVCC handover for the UE with multiple IMS voice calls in HSPA network.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processor 200 processes the program code 214 related to the abovementioned processes and the processed results can handling call transferring during a SRVCC handover procedure in the wireless communications system 10.

To sum up, according to examples of present disclosure, the UE and the network may determine how to switch the multiple IMS calls when the UE having IMS calls receives a SRVCC handover command. The UE and the network may switch the multiple IMS calls to the multiple CS calls and set the TI values for each of the CS calls according to the IMS calls. Alternatively, the UE and the network may set the TI values according to the commands which including TI values for each of the CS calls. Alternatively, the UE and the network may only switch the active IMS call to the CS call or not even initiate the SRVCC handover procedure when the UE has multiple IMS calls.

Those skilled in the art will readily observe that numerous modifications and alterations of the device and method may be made within the scope of the present invention as defined by the appended claims.

## Claims

1. A method of handling call transferring for a communication device during a Single Radio Voice Call Continuity, SRVCC, handover procedure, the method comprising:
switching a plurality of IP Multimedia System, IMS, calls to a plurality of
corresponding circuit-switched, CS, calls according to reception of a handover command when a mobile device has the plurality of IMS calls with a network (402, 404); and
setting a plurality of transaction identifier, TI, values for each of the
plurality of corresponding CS calls according to the plurality of IMS calls (406);
wherein the communication device is the mobile device or a network;
**characterized by**:
having an original CS call before the SRVCC handover procedure; and
setting a plurality of call states for some of the plurality of corresponding
CS calls from an active state to a held state when the original CS call is active.

2. The method of claim 1, wherein setting the plurality of TI values for each of the plurality of corresponding CS calls according to the plurality of IMS calls comprises deriving the plurality of TI values from a plurality of IMS call identity, ID, values of the plurality of IMS calls.

3. The method of claim 1, wherein setting the plurality of TI values for each of the plurality of corresponding CS calls according to the plurality of IMS calls comprises deriving the plurality of TI values from an order of a plurality of IMS call ID values of the plurality of IMS calls.

4. The method of claim 1, wherein setting the plurality of TI values for each of the plurality of corresponding CS calls according to the plurality of IMS calls comprises setting the plurality of TI values according to a plurality of call states of the plurality of IMS calls.

5. The method of claim 1, further comprising:
setting a plurality of TI flags for each of the plurality of corresponding CS call as a mobile terminated call or a mobile originated call.

6. The method of claim 1, wherein one of the plurality of IMS calls is active while the others are held.

## Patentansprüche

1. Ein Verfahren zu Behandlung von Anrufüberleitung für ein Kommunikationsgerät während einer SRVCC Handoverprozedur, SRVCC = Single Radio Voice Call Continiuity, auch Einzelfunksprachkontinuität, wobei das Verfahren Folgendes aufweist:
Schalten einer Vielzahl von IMS Anrufen, IMS = IP Multimedia System, zu einer Vielzahl von entsprechenden leitungsgeschalteten Anrufen, auch CS Anrufe, CS = Circuit Switched, gemäß dem Empfang eines Handoverkommandos, und zwar wenn ein mobiles Gerät eine Vielzahl von IMS Anrufen mit einem Netzwerk (402, 404) hat; und
Setzen einer Vielzahl von Transaktionsbezeichnerwerten, auch TI Werte, TI
= Transaction Identifier, für jeden der entsprechenden CS Anrufe gemäß der Vielzahl der IMS Anrufen (406);
wobei das Kommunikationsgerät ein mobiles Gerät oder ein Netzwerk ist, **gekennzeichnet durch**:
Führen eines ursprünglichen CS Anrufs vor der SRVCC Handoverprozedur;
und
Setzen einer Vielzahl von Anrufzuständen für einige der Vielzahl von entsprechenden CS Anrufen aus einem aktiven Zustand in einen gehaltenen Zustand, und zwar wenn der ursprüngliche CS Anruf aktiv ist.

2. Verfahren nach Anspruch 1, wobei Setzen der Vielzahl von TI Werten für jeden der Vielzahl von entsprechenden CS Anrufen gemäß der Vielzahl von IMS Anrufen Ableiten der Vielzahl von TI Werten aus einer Vielzahl von IMS Anrufsbezeichnerwerten, auch ID Werte, ID = IMS Call Identity, aus der Vielzahl von IMS Anrufen aufweist.

3. Verfahren nach Anspruch 1, wobei Setzen der Vielzahl von TI Werten für jeden der Vielzahl von entsprechenden CS Anrufen gemäß der Vielzahl von IMS Anrufen Ableiten der Vielzahl von TI Werten aus einer Reihenfolge einer Vielzahl von IMS Anrufs-ID-Werten der Vielzahl von IMS Anrufen aufweist.

4. Verfahren nach Anspruch 1, wobei Setzen der Vielzahl von TI Werten für jeden der Vielzahl von entsprechenden CS Anrufen gemäß der Vielzahl der IMS Anrufe Setzen der Vielzahl von TI Werten gemäß einer Vielzahl von Anrufzuständen der Vielzahl von IMS Anrufen aufweist.

5. Verfahren nach Anspruch 1, das ferner Folgendes aufweist:
Setzen einer Vielzahl von TI Merkern für jede der Vielzahl von entsprechenden CS Anrufen als einen mobilterminierten Anruf, auch Mobile Terminated Call, oder als einen mobilveranlassten Anruf, auch Mobile Originated Call.

6. Verfahren nach Anspruch 1, wobei einer der Vielzahl von IMS Anrufen aktive ist während die anderen gehalten werden.

## Revendications

1. Procédé pour gérer des transferts d'appels pour un dispositif de communication pendant une procédure de transfert à Continuité d'Appel Vocal Radio Unique, SRVCC, le procédé comprenant :
commuter une pluralité d'appels de Système Multimédia IP, IMS, vers une pluralité d'appels à circuits commutés, CS, correspondants conformément à la réception d'une commande de transfert lorsqu'un dispositif mobile a en cours la pluralité d'appel IMS avec un réseau (402, 404) ; et
mettre une pluralité de valeurs d'identificateurs de transaction, TI, pour chacun de la pluralité d'appels CS correspondants en accord avec la pluralité d'appels IMS (406) ;
dans lequel le dispositif de communication est le dispositif mobile ou un réseau ;
**caractérisé par** :
avoir en cours un appel CS original avant la procédure de transfert SRVCC ; et
mettre une pluralité d'états d'appel pour certains de la pluralité d'appels CS correspondants d'un état actif à un état de maintien lorsque l'appel CS original est actif.

2. Procédé selon la revendication 1, dans lequel la mise en place de la pluralité de valeurs TI pour chacun de la pluralité d'appels CS correspondants conformément à la pluralité d'appel IMS comprend de déduire la pluralité de valeurs TI d'une pluralité de valeurs d'identité d'appel IMS, ID, de la pluralité d'appels IMS.

3. Procédé selon la revendication 1, dans lequel le fait de mettre la pluralité de valeurs TI pour chacun de la pluralité d'appels CS correspondants en accord avec la pluralité d'appel IMS comprend de déduire la pluralité de valeurs TI d'un ordre d'une pluralité de valeurs d'ID d'appels IMS de la pluralité d'appels IMS.

4. Procédé selon la revendication 1, dans lequel le fait de mettre la pluralité de valeurs TI pour chacun de la pluralité d'appels CS correspondants en accord avec la pluralité d'appel IMS comprend de régler la pluralité de valeurs TI conformément à une pluralité d'états d'appels de la pluralité d'appels IMS.

5. Procédé selon la revendication 1, comprenant en outre :
mettre une pluralité de drapeaux TI pour chacun de la pluralité d'appels CS correspondants comme représentant un appel aboutissant sur un mobile ou un appel initié par un mobile.

6. Procédé selon la revendication 1, dans lequel l'un de la pluralité d'appels IMS est active tandis que les autres sont en maintien.
